# FASCICULE DE BREVET EUROPEEN

(11) **EP 1 471 996 B1**
(45) Date de publication et mention de la délivrance du brevet: **15.06.2005**
(21) Numéro de dépôt: 03717358.0
(22) Date de dépôt: 30.01.2003
(51) Int. Cl.: B01J 14/00, B01J 10/00, B01J 19/02, B01J 19/18, F28F 21/04

(54) **REACTEUR REVETU EN PHASE LIQUIDE**
BESCHICHTETER FLÜSSIGPHASE-REAKTOR
COATED LIQUID PHASE REACTOR

(30) Priorité: 06.02.2002 FR 0201393
(43) Date de publication de la demande: 03.11.2004
(73) Titulaire: ARKEMA, 92800 Puteaux (FR)
(72) Inventeur: DEVIC, Michel, F-69110 Sainte Foy Les Lyon (FR); BONNET, Philippe, F-69007 Lyon (FR); LACROIX, Eric, F-69480 Ambérieux d'Azergues (FR)
(74) Mandataire: Dang, Doris
(86) Numéro de dépôt international: PCT/FR2003/000286
(87) Numéro de publication internationale: WO 2003/066210

(56) Documents cités:
- EP-A- 0 294 850
- EP-A- 0 323 287
- EP-A- 0 479 657
- EP-A- 0 532 984
- US-A- 4 166 536
- US-A- 5 902 912

## Description

La présente invention a pour objet un réacteur convenant à la réaction de fluoration en phase liquide des hydrocarbures, en particulier des hydrocarbures halogénés, et plus particulièrement des hydrocarbures chlorés, et le procédé de fluoration correspondant.

La réaction de fluoration en phase liquide des hydrocarbures halogénés est un des moyens de préparation des hydrofluorocarbures (aussi appelés HFC). Ces composés sont particulièrement utiles comme substituts des chlorofluorocarbures (également appelés CFC) ou même des hydrochlorofluorocarbures (également désignés sous le terme de HCFC) dont la commercialisation et l'utilisation, notamment comme fluide de réfrigération, ont été limitées à la suite du Protocole de Montréal, en raison des risques que la libération de ces produits dans l'atmosphère fait peser sur la couche d'ozone stratosphérique.

Les HFC sont généralement préparés par action de l'acide fluorhydrique anhydre (HF) sur un hydrocarbure chloré, en présence d'un catalyseur, selon une réaction de substitution d'un ou des atomes de chlore par un ou des atomes de fluor. Cette réaction produit également du chlorure d'hydrogène (HCl).

Cette réaction peut être effectuée en phase gaz ou en phase liquide. La réaction en phase liquide qui s'effectue généralement à une température comprise entre 50 et 150°C offre l'avantage de nécessiter une température réactionnelle moins élevée qu'une réaction en phase gaz, et, en conséquence, présente une sélectivité en HFC en général améliorée.

La demande de brevet EP 0808814 décrit la mise en oeuvre d'une telle réaction de fluoration en phase liquide pour la préparation simultanée de difluorométhane et de difluorochlorométhane (également connus sous la dénomination respective de HFC-32 et HCFC-22). Ce document mentionne l'utilisation comme catalyseur d'un halogénure d'antimoine, et expose l'inconvénient de ce procédé. Cet inconvénient est lié à la corrosion du matériau du réacteur par le mélange réactionnel, et notamment par la combinaison de l'HF et de l'halogénure d'antimoine. Un tel inconvénient, qui entraîne une réduction de la durée de vie du réacteur et une consommation du catalyseur, est également à considérer dans la perspective de la sécurité du déroulement du procédé, qui est un aspect essentiel dans la mise en oeuvre industrielle d'un procédé de fabrication de HFC.

La demande EP 0808814 résout ce problème en préconisant des conditions de température et de pression particulières permettant à l'HF de ne pas être à l'état liquide. Une conséquence indésirable de ce mode de réaction de l'HF est toutefois que la productivité en HFC désiré est notablement abaissée.

La demande internationale de brevet WO 99/00344 a également pour but de limiter la corrosion des réacteurs utilisés pour la fluoration en phase liquide des composés organiques chlorés. Elle indique bien que le caractère superacide des milieux réactionnels mis en oeuvre a pour effet d'attaquer les matériaux habituellement utilisés pour la fabrication des réacteurs chimiques, y compris les matériaux résistants à la corrosion tels que des alliages à base de nickel et de chrome, connus dans le métier sous la dénomination Inconel®, et Hastelloy®. Cette demande propose dans ce but de revêtir la paroi desdits réacteurs d'un polymère fluoré. Alors que cette demande cite un certain nombre de polymères fluorés envisageables à cet effet, et qu'elle mentionne l'intérêt d'opérer un préchauffage des réactifs, elle ne donne à connaître pour autant aucun autre moyen d'opérer le transfert de chaleur qui est fréquemment requis dans une réaction de fluoration en phase liquide. Elle suggère simplement le recours habituel à un transfert de chaleur à travers les parois du réacteur. Or, un tel procédé est peu efficace en raison de la mauvaise transmission de chaleur à travers une couche de polymère fluoré.

La présente demande a également pour but de diminuer la corrosion des matériaux utilisés généralement pour la fabrication des réacteurs (tel l'acier inoxydable). Cette corrosion est observée lors de l'utilisation des milieux réactionnels requis pour la mise en oeuvre de réactions de fluoration en phase liquide. Durant les essais réalisés pour tenter de remédier à ce problème, il est apparu aux inventeurs qu'un copolymère fluoré spécifique, appliqué sous forme de révêtement sur un subtrat en acier inoxydable, présentait une résistance à la corrosion améliorée, protégeant ainsi le substrat. Sans lier le déposant en aucune manière, il semble que le mécanisme expliquant la corrosion constatée sur de l'acier inoxydable revêtu d'une couche de polymère fluoré, soit lié à la diffusion plus ou moins rapide des ions Sb(V) du catalyseur de fluoration, à travers la couche du dit polymère.

Il a à présent été trouvé qu'en combinant ce polymère fluoré spécifique avec un moyen de chauffage particulier du réacteur, il est possible d'obtenir un réacteur permettant de réaliser dans d'excellentes conditions de sélectivité et de productivité des réactions de fluoration en phase liquide portant sur des hydrocarbures halogénés, notamment chlorés, en vue de la fabrication des HFC.

L'invention concerne donc en premier lieu un réacteur, convenant à la fluoration en phase liquide, et pourvu comme moyen de chauffage d'au moins un élément fixé sur le couvercle de manière à plonger jusqu'au fond de la cuve, caractérisé en ce que les parties dudit réacteur susceptibles d'être en contact avec le milieu réactionnel, autres que l'élément de chauffage, sont revêtues d'un copolymère de tétrafluoroéthylène et d'hexafluoropropylène, et en ce que la partie de l'élément de chauffage susceptible d'être en contact avec le milieu réactionnel est constituée de carbure de silicium.

Le copolymère de tétrafluoroéthylène et de perfluoropropylène (ce dernier composé étant également dénommé hexafluoropropylène) est désigné ci-après par l'abréviation TFE-PFP. Il permet avantageusement de limiter la diffusion des ions Sb (V) et d'empêcher ainsi la corrosion du substrat métallique constituant le réacteur. La disposition particulière de l'élément chauffant ainsi que le choix du carbure de silicium comme matériau qui en constitue le revêtement (donc susceptible d'être en contact avec le milieu réactionnel superacide durant le fonctionnement du réacteur), permettent de maintenir une excellente résistance à la corrosion, tout en apportant les calories requises par la réaction de fluoration, grâce à ses propriétés avantageuses de conductivité thermique. Cette combinaison de caractéristiques évite ainsi l'inconvénient constaté lorsque le polymère fluoré est utilisé comme revêtement d'un réacteur chauffé -par double enveloppe ou serpentin- à travers la paroi revêtue de polymère. Dans un tel cas en effet, la résistance mécanique de la couche de polymère est très affaiblie, ce qui diminue l'étanchéité du revêtement protecteur et favorise donc l'attaque des parois du réacteur.

Selon un mode de réalisation préféré, le carbure de silicium utilisé pour confectionner l'élément de chauffage présente une structure cristalline de type alpha et est substantiellement exempt d'atome de silicium libre. Dans ces conditions, l'élément de chauffage, qui est au contact du milieu réactionnel superacide présente une résistance à la corrosion tout à fait excellente. Par les termes "carbure de silicium substantiellement exempt de silicium libre", il faut entendre un matériau dont la teneur en silicium, mesurée par attaque chimique (en général par un acide fort) puis dosage par spectrométrie d'émission atomique à plasma est inférieure à 0,01 % en poids, et est de préférence voisine de 0 %.

Selon un autre mode de réalisation, éventuellement combiné avec le précédent, le carbure de silicium mis en oeuvre a une porosité ouverte substantiellement nulle, et est constitué de cristaux dont la taille moyenne est comprise entre 2 et 10 µm, de préférence entre 3 et 7 µm, et encore plus préférentiellement voisine de 5 µm. On entend par porosité ouverte, la présence dans le matériau de pores communiquant entre eux, et avec la surface dudit matériau. Cette porosité ouverte est généralement mesurée par adsorption d'azote à la température de l'azote liquide.

De préférence, la partie de l'élément de chauffage susceptible d'être en contact avec le milieu réactionnel est fabriquée en mettant en forme du carbure de silicium par frittage.

Selon un mode de réalisation également préféré, l'élément de chauffage est une gaine cylindrique creuse et fermée à son extrémité inférieure, constituée de carbure de silicium. Cette gaine est placée en général verticalement dans la cuve du réacteur et reçoit dans sa partie creuse une source de chauffage, telle que la circulation d'un fluide caloporteur ou encore une résistance électrique. C'est la paroi extérieure de cette gaine qui est donc en contact avec le milieu réactionnel durant le fonctionnement du réacteur.

L'élément de chauffage peut aussi comprendre une plaque ou une gaine constituées de carbure de silicium, de formes diverses, dans lesquelles a été noyée une résistance électrique comme source de chauffage.

L'élément de chauffage peut également être constitué entièrement de carbure de silicium qui en raison de sa résistivité avantageuse convient à un apport de chaleur par effet Joule.

Le nombre d'éléments chauffants dont est équipé le réacteur est adapté en fonction des dimensions de celui-ci et de la puissance de chauffe requise.

Le carbure de silicium doit être utilisé pour toute partie de l'élément chauffant susceptible d'être en contact avec le milieu réactionnel, et avec les 2 phases liquide ou vapeur sous lesquelles peut se présenter ledit milieu dans la réaction de fluoration. Ce milieu réactionnel est un mélange comprenant de l'HF, un hydrocarbure halogéné, et plus particulièrement chloré, et un catalyseur à base d'antimoine et est placé à une température comprise entre 30 et 180°C, de préférence entre 70 et 150°C, et à une pression comprise entre 5 et 50 bars, de préférence entre 10 et 40 bars.

Les parties du réacteur autres que l'élément de chauffage, qui sont susceptibles d'être en contact avec le milieu réactionnel comprennent notamment :
- la cuve dans laquelle sont chargés les réactifs et le catalyseur,
- les moyens d'agitation du milieu,
- les moyens d'introduction des réactifs et d'évacuation des produits et sous-produits (incluant les tuyauteries et vannes),
- les moyens de mesure (incluant les capteurs de niveau, de température et de pression),
- les moyens de sécurité (tels que les soupapes ou disques de rupture), et
- les moyens de séparation du catalyseur des vapeurs issues du milieu réactionnel. Ces derniers moyens comprennent par exemple une colonne à reflux montée sur le couvercle du réacteur, reliée à l'intérieur de la cuve et surmontée d'un condenseur. Ces moyens ont pour but de garder le catalyseur de fluoration et l'agent de fluoration à l'intérieur de la cuve, dans le milieu réactionnel, tout en permettant l'évacuation du réacteur des produits désirés, sous-produits et de l'HCl formés.

Le revêtement de copolymère de tétrafluoroéthylène et d' hexafluoropropylène doit porter sur toutes les parties du réacteur susceptibles d'être en contact avec le milieu réactionnel. Les parties du réacteur susceptibles d'être en contact avec la phase gazeuse peuvent également être revêtues dudit copolymère.

Le copolymère de tétrafluoroéthylène et d'hexafluoropropylène a pour formule générale:

-[-CF₂-CF₂]ₙ-[CF₂-CF(CF₃)-]ₘ-

dans laquelle n et m sont des nombres entiers supérieurs à 100.

La masse molaire dudit copolymère est généralement comprise entre 150 000 et 3 000 000 g.

On préfère utiliser un TFE-PEP obtenu par polymérisation d'un mélange de monomères comprenant de 10 à 15 % en poids de perfluoropropène, et notamment environ 12 %.

Selon une variante préférée de l'invention, le revêtement du copolymère a une épaisseur comprise entre 10 µm et 2 cm, de préférence entre 1 mm et 2 cm.

La réalisation de ce revêtement peut s'effectuer selon des techniques connues, telle que l'utilisation de plaques de copolymères, d'épaisseur comprise entre 1 mm et 2 cm, de préférence entre 2 mm et 5 mm. Ces plaques sont assemblées bord à bord par soudage ; le revêtement ainsi obtenu peut être flottant ou bien collé à la paroi de la cuve. On peut également déposer sur les parois de la cuve un film continu de copolymère d'épaisseur comprise entre 10 µm et 0,5 mm, par exemple par projection d'une poudre (poudrage électrostatique) à chaud, ou par mise en oeuvre d'un bain fluidisé également à chaud.

Le matériau constitutif du réacteur sur lequel est appliqué le revêtement de TFE-PFP est choisi parmi les matériaux conventionnels, connus pour résister à la corrosion par l'HF, qui incluent sans limitation l'acier, l'acier inoxydable, les grades résistants à la corrosion d'INCONEL®, de MONEL®, et d'HASTELLOY®. On préfère utiliser l'acier inoxydable, et tout particulièrement l'acier inoxydable 316 L.

La présente invention concerne également un procédé de fluoration en phase liquide d'hydrocarbures halogénés, comprenant leur réaction avec un agent fluorant en présence d'un catalyseur, caractérisé en ce que ladite réaction est mise en oeuvre dans le réacteur tel que décrit précédemment.

Les hydrocarbures halogénés peuvent être saturés ou insaturés, linéaires ou cycliques. On préfère utiliser des composés à 1, 2 ou 3 atomes de carbone, et plus particulièrement des hydrocarbures chlorés.

Cette réaction est avantageusement utilisée pour la préparation de HFC, ou HCFC. On peut citer ainsi l'accès au HFC-32 (de formule CH₂F₂) par fluoration du F30 (chlorure de méthylène, de formule CH₂Cl₂) et/ou du F31 (CH₂FCl). On peut citer également l'accès au HFC-134a (CF₃-CH₂F) ou son précurseur le F133a (CF₃-CH₂Cl) par fluoration du trichloréthylène, ou encore l'accès au F22 (CHClF₂) par fluoration du chloroforme. De même, le F122 (CF₂Cl-CHCl₂), F123 (CF₃-CHCl₂), F124 (CF₃-CFHCl), et F125 (CF₃-CHF₂) peuvent être préparés par fluoration du perchloréthylène ou d'un intermédiaire tel que le F121 (CHCl₂-CCl₂F), F1111 (CCl₂=CClF).

L'agent fluorant est de préférence l'HF anhydre, mais peut être également un autre agent fluorant tel que F₂, SbF₅, CoF₃.

Le procédé de fluoration en phase liquide peut être mis en oeuvre dans des conditions discontinues, semi-continues ou encore en continu.

Lorsque la fluoration est mise en oeuvre en conditions discontinues, l'appareillage utilisé est alors un autoclave fermé et agité dans lequel les réactifs sont préalablement introduits avant le début de la réaction. La pression de l'autoclave varie donc avec l'avancement de la réaction.

Lorsque le procédé est mis en oeuvre dans un processus semi-continu, l'appareillage utilisé est constitué d'un autoclave surmonté ou bien d'un condenseur simple, ou bien d'un ensemble constitué d'une colonne de rétrogradation et d'un condenseur de reflux. Dans les deux cas, une vanne de régulation de pression est montée après le condenseur. Comme précédemment, les réactifs sont préalablement introduits, mais les produits de la réaction à bas point d'ébullition sont extraits en continu durant la réaction.

Lorsque le procédé est mis en oeuvre en continu, on utilise le même appareillage que celui décrit précédemment et pour lequel les réactifs peuvent être introduits en continu. Dans ce cas, la réaction se fait préférentiellement par alimentation en continu des réactifs dans un solvant, dans lequel est également solubilisé le catalyseur. Comme solvant, on peut choisir un des réactifs de départ (HF ou l'hydrocarbure chloré), ou bien un des intermédiaires de réactions ou encore tout autre solvant capable de solubiliser le catalyseur.

Le catalyseur de fluoration est un acide de Lewis ou un mélange d'acides de Lewis, lesdits acides étant notamment choisis parmi les halogénures, oxydes ou oxyhalogénures métalliques. Parmi les métaux qui conviennent, on peut citer : Sn, Sb, Ta, Nb, Ti. Lorsque les halogénures d'antimoine (ou les acides de Lewis contenant de l'antimoine) au degré d'oxydation V sont utilisés, il est avantageux dans un procédé en continu d'alimenter conjointement aux réactifs, du chlore élémentaire, Cl₂, en quantité suffisante (0,005 à 0,25 mole de chlore par mole de catalyseur) pour maintenir le catalyseur au degré d'oxydation V.

On préfère utiliser comme catalyseur le pentachlorure d'antimoine.

La quantité de catalyseur mis en oeuvre est généralement comprise entre 0,0005 mole et 0,1 mole par mole de solvant ou d'hydrocarbure halogéné. De préférence, cette quantité est comprise entre 0,001 et 0,05 mole. La quantité de fluorure d'hydrogène alimenté (ou mise en oeuvre en conditions discontinues) est généralement comprise entre 0,5 et 50 moles par mole d'hydrocarbure chloré alimenté (ou mis en oeuvre en conditions discontinues) et de préférence entre 1 et 10 moles par mole d'hydrocarbure chloré. Dans le cas d'un procédé en continu, cette quantité est proche de la stoechiométrie requise par la réaction.

La température à laquelle est réalisée la réaction est généralement comprise entre 30 et 180°C, de préférence entre 70 et 150°C et encore plus préférentiellement entre 90 et 140°C. La pression à laquelle la réaction est réalisée est choisie de manière à maintenir le milieu réactionnel en phase liquide. Elle se situe généralement entre 5 et 50 bars et préférentiellement entre 10 et 40 bars. La température du condenseur est fixée en fonction de la quantité et de la nature des produits susceptibles d'être évacués durant la réaction. Elle est généralement comprise entre -50 et 150°C et préférentiellement entre -10 et 100°C.

Les exemples suivants illustrent l'invention sans la limiter.

### Exemple 1 : Résistance à la corrosion de plaques d'acier inoxydable revêtues de polymère fluoré

Des plaques d'acier inoxydables (longueur : 9 cm, largeur : 5 cm et épaisseur: 2 mm) sont recouvertes sur leur deux faces d'une plaque de 2 mm d'épaisseur constituée de différents polymères fluorés, la fixation de l'ensemble étant assurée par soudage.

Les polymères fluorés testés sont:
- le polytétrafluoroéthylène (ci-après PTFE) ;
- un copolymère obtenu par polymérisation d'un mélange de monomères comprenant en poids 2 % de perfluoropropylvinyléther et 98 % de tétrafluoroéthylène (ci-après PFA) ;
- un copolymère obtenu par polymérisation d'un mélange de monomères comprenant en poids 12 % de perfluoropropène et 88 % de tétrafluoroéthylène (ci-après FEP).

Les plaques ainsi préparées sont placées dans un réacteur de fluoration en phase liquide à une température de 100°C et sous une pression initiale de 10 bars, dont le milieu réactionnel initial liquide a la composition suivante:
■ HF anhydre 80% en poids
■ SbCl₅ 12% en poids
■ CH₂Cl₂ 8% en poids

La durée de l'essai est de 168 heures.

En fin d'essai, le réacteur est dégazé pour évacuer les produits de la réaction, et les plaques sont lavées à l'eau. Un échantillon du revêtement protecteur est alors prélevé et analysé par microscopie électronique à balayage.

Une analyse par microdiffraction aux rayons X sur la coupe transversale de la plaque revêtue de polymère permet de mesurer la diffusion de l'antimoine à travers celle-ci.

Les résultats du test sont regroupés dans la tableau ci-dessous.

| **Polymère** | **Aspect du polymère** | **Diffusion de SbCl**_{**5**} | **Corrosion de la plaque métallique** |
|---|---|---|---|
| PTFE (essai comparatif) | Déformations importantes | Diffusion de Sb sur 0,2 mm | Oui |
| PFA (essai comparatif) | Pas de déformation | Diffusion de Sb Sur 1,5 mm | Oui |
| FEP | Pas de déformation | Aucune diffusion | Non |

Ces résultats montrent que le FEP constitue une barrière totalement étanche vis à vis du mélange super acide HF/SbCl₅ et présente une aptitude améliorée par rapport au PFA et au PTFE pour la réalisation d'un revêtement étanche au milieu réactionnel HF/SbCl₅ représentatif d'une réaction de fluoration en phase liquide.

### Exemple 2 : Résistance à la corrosion du carbure de silicium fritté.

On utilise une éprouvette cylindrique creuse réalisée par frittage de carbure de silicium, dont les caractéristiques sont les suivantes :
■ structure cristalline : type alpha ;
■ teneur en silicium libre: 0 % en poids ;
■ taille moyenne de cristaux: 5 µm ;
■ porosité ouverte : 0 % en volume.

Cette éprouvette est placée dans un réacteur de fluoration en phase liquide à une température de 100°C et sous une pression initiale de 10 bars, avec un mélange de composition suivante :
■ HF anhydre 87% en poids;
■ SbCl₅ 13% en poids.

La durée de l'essai est de 480 heures.

En fin d'essai, le réacteur est dégazé ; l'éprouvette est lavée à l'eau puis séchée et pesée. Après pesée, on ne constate aucune diminution significative de poids, et visuellement aucune trace de corrosion.

Ce résultat montre que le matériau utilisé est parfaitement approprié à la confection de gaines chauffantes d'un milieu réactionnel comprenant HF/SbCl₅.

### Exemple 3 : Fluoration du chlorure de méthylène (F30) en F32 dans un réacteur revêtu de FEP

L'appareillage utilisé est un autoclave cylindrique en acier inoxydable 316L de 1 litre, dont les parois sont revêtues d'une plaque (encore appelée chemise) en FEP de 3 mm d'épaisseur, sous la forme d'une seule pièce cylindrique fermée par un disque à son extrémité inférieure, et de diamètre légèrement inférieur à celui de l'autoclave, de manière à épouser très exactement la forme des parois intérieures de celui-ci.

Cet autoclave est surmonté d'un condenseur simple et équipé d'une gaine cylindrique creuse réalisée par frittage de carbure de silicium, dont les caractéristiques sont identiques à celles de l'exemple 2. Dans cette gaine fermée à son extrémité inférieure est introduite une résistance électrique couplée à un moyen de régulation de température adéquat.

L'autoclave est alors plongé dans l'azote liquide, puis sont successivement chargés 80 g d'HF (4 moles), 85 g de F30 (1 mole) et 90 g de SbCl₅ (0,3 mole). La température de l'autoclave est ensuite ramenée à température ambiante. A l'aide de la résistance électrique, la température du milieu réactionnel est alors portée à 110°C tandis que la température du condenseur est maintenue à 20°C. La pression est régulée à 20 bars absolus. Durant la réaction, les produits de réaction volatils (le HFC-32 et l'HCl) évacués en continu, passent dans un barboteur à eau puis dans un sécheur avant d'être recueillis dans un piège en acier inoxydable refroidi à l'azote liquide. Après 6 h de réaction, le chauffage est stoppé. Après retour à la température ambiante, l'autoclave est dégazé et les produits de la réaction sont lavés, séchés et piégés comme précédemment. La phase gaz et la phase liquide des différents pièges sont analysées ainsi que la phase liquide restant éventuellement dans l'autoclave après le dégazage.

90 % du F30 initial est converti dont 98 % en F32 et 2 % en F31 (chlorofluorométhane). A l'issue de la réaction, la gaine chauffante ne présente aucune altération à l'extérieur comme à l'intérieur. Par ailleurs aucune attaque due à la corrosion n'est observée dans le réacteur après dépose de la plaque en FEP.

### Exemple 4 (comparatif) : Fluoration du chlorure de méthylène (F30) en F32 dans un réacteur révêtu de PTFE et chauffé par une double enveloppe extérieure à la cuve

On répète l'exemple 3, sauf que l'on utilise comme revêtement intérieur pour l'autoclave de 1 litre une chemise en PTFE de 2 mm d'épaisseur, et que le chauffage est assuré par une double enveloppe extérieure fixée sur la cuve de l'autoclave et dans laquelle circule de l'huile chaude.

Après réaction et ouverture de l'autoclave, on constate que la chemise en PTFE est déformée en plusieurs endroits et que la paroi intérieure de la cuve présente une corrosion importante.

### Exemple 5 (comparatif) : Fluoration du chlorure de méthylène (F30) en F32 dans un réacteur revêtu de FEP et chauffé par une double enveloppe extérieure à la cuve

On répète l'exemple 4, sauf que l'on utilise une chemise intérieure en FEP.

On constate que la chemise présente des déformations mais que la paroi intérieure de la cuve n'est pas corrodée. La présence de telles déformations entraînerait dans les conditions d'utilisation industrielle une détérioration rapide de la chemise, rendant le réacteur impropre à son usage.

## Revendications

1. Réacteur, convenant à la fluoration en phase liquide, et pourvu comme moyen de chauffage d'au moins un élément fixé sur le couvercle de manière à plonger jusqu'au fond de la cuve, **caractérisé en ce que** les parties dudit réacteur susceptibles d'être en contact avec le milieu réactionnel, autres que l'élément de chauffage, sont revêtues d'un copolymère de tétrafluoroéthylène et d' hexafluoropropylène, et **en ce que** la partie de l'élément de chauffage susceptible d'être en contact avec le milieu réactionnel est constituée de carbure de silicium.

2. Réacteur selon la revendication 1, **caractérisé en ce que** le carbure de silicium utilisé pour confectionner l'élément de chauffage présente une structure cristalline de type alpha et est substantiellement exempt d'atome de silicium libre.

3. Réacteur selon l'une des revendications 1 ou 2, **caractérisé en ce que** le carbure de silicium mis en oeuvre a une porosité ouverte substantiellement nulle, et est constitué de cristaux dont la taille moyenne est comprise entre 2 et 10 µm, de préférence entre 3 et 7 µm, et encore plus préférentiellement voisine de 5 µm.

4. Réacteur selon l'une des revendications 1 à 3, **caractérisé en ce que** l'élément de chauffage susceptible d'être en contact avec le milieu réactionnel est fabriqué en mettant en forme du carbure de silicium par frittage.

5. Réacteur selon l'une des revendications 1 à 4, **caractérisé en ce que** l'élément de chauffage est une gaine cylindrique creuse et fermée à son extrémité inférieure, constituée de carbure de silicium.

6. Réacteur selon l'une des revendications 1 à 5, **caractérisé en ce que** les parties autres que l'élément de chauffage, qui sont susceptibles d'être en contact avec le milieu réactionnel, comprennent notamment :
- la cuve,
- les moyens d'agitation du milieu,
- les moyens d'introduction des réactifs et d'évacuation des produits et sous-produits,
- les moyens de mesure,
- les moyens de sécurité, et
- les moyens de séparation du catalyseur des vapeurs issues du milieu réactionnel.

7. Réacteur selon l'une des revendications 1 à 6, **caractérisé en ce que** on utilise un copolymère de tétrafluoroéthylène et d'hexafluoropropylène obtenu par polymérisation d'un mélange de monomères comprenant de 10 à 15 % en poids d' hexafluoropropylène, et de préférence environ 12 %.

8. Réacteur selon l'une des revendications 1 à 7, **caractérisé en ce que** le revêtement du copolymère a une épaisseur comprise entre 10 µm et 2 cm, de préférence entre 1 mm et 2 cm.

9. Procédé de fluoration en phase liquide d'hydrocarbures halogénés, comprenant leur réaction avec un agent fluorant en présence d'un catalyseur, **caractérisé en ce que** ladite réaction est mise en oeuvre dans le réacteur tel que défini dans l'une des revendications 1 à 8.

10. Procédé selon la revendication 9, **caractérisé en ce que** l'on fait réagir des composés chlorés à 1, 2 ou 3 atomes de carbone.

11. Procédé selon l'une des revendications 9 ou 10, **caractérisé en ce que** le HFC-32 est préparé par fluoration du F30 et/ou du F31.

## Patentansprüche

1. Reaktor für die Flüssigphasenfluorierung, der als Heizeinrichtung mit mindestens einem Element ausgestattet ist, das so am Deckel befestigt ist, daß es bis zum Behälterboden eintaucht, **dadurch gekennzeichnet, daß** die von dem Heizelement verschiedenen Teile des Reaktors, die mit dem Reaktionsmedium in Kontakt kommen können, mit einem Tetrafluorethylen-Hexafluorpropylen-Copolymer beschichtet sind und der Teil des Heizelements, der mit dem Reaktionsmedium in Kontakt kommen kann, aus Siliciumcarbid besteht.

2. Reaktor nach Anspruch 1, **dadurch gekennzeichnet, daß** das zur Anfertigung des Heizelements verwendete Siliciumcarbid eine Kristallstruktur vom alpha-Typ aufweist und von freien Siliciumatomen weitgehend frei ist.

3. Reaktor nach Anspruch 1 oder 2, **dadurch gekennzeichnet, daß** das verwendete Siliciumcarbid praktisch keine offene Porosität aufweist und aus Kristallen mit einer mittleren Größe zwischen 2 und 10 µm, vorzugsweise zwischen 2 und 7 µm und noch weiter bevorzugt in der Nähe von 5 µm besteht.

4. Reaktor nach einem der Ansprüche 1 bis 3, **dadurch gekennzeichnet, daß** das Heizelement, das mit dem Reaktionsmedium in Kontakt kommen kann, durch Formen des Siliciumcarbids durch Sintern hergestellt wird.

5. Reaktor nach einem der Ansprüche 1 bis 4, **dadurch gekennzeichnet, daß** es sich bei dem Heizelement um einen an seinem unteren Ende geschlossenen hohlen zylindrischen Mantel aus Siliciumcarbid handelt.

6. Reaktor nach einem der Ansprüche 1 bis 5, **dadurch gekennzeichnet, daß** die von dem Heizelement verschiedenen Teile insbesondere umfassen:
- den Behälter,
- die Einrichtungen zum Rühren des Mediums,
- die Einrichtungen zum Eintragen der Reaktanten und zum Austragen der Produkte und Nebenprodukte,
- die Meßeinrichtungen,
- die Sicherheitseinrichtungen und
- die Einrichtungen zum Abtrennen des Katalysators von den Dämpfen aus dem Reaktionsmedium.

7. Reaktor nach einem der Ansprüche 1 bis 6, **dadurch gekennzeichnet, daß** ein durch Polymerisation einer 10 bis 15 Gew.-% und vorzugsweise 12 Gew.-% Hexafluorpropylen enthaltenden Monomerenmischung erhaltenes Tetrafluorethylen-Hexafluorpropylen-Copolymer verwendet wird.

8. Reaktor nach einem der Ansprüche 1 bis 7, **dadurch gekennzeichnet, daß** die Copolymerbeschichtung eine Dicke zwischen 10 µm und 2 cm und vorzugsweise zwischen 1 mm und 2 mm aufweist.

9. Verfahren zur Flüssigphasenfluorierung von halogenierten Kohlenwasserstoffen, bei dem man diese in Gegenwart eines Katalysators mit einem Fluorierungsmittel umsetzt, **dadurch gekennzeichnet, daß** man die Umsetzung in einem Reaktor gemäß einem der Ansprüche 1 bis 8 durchführt.

10. Verfahren nach Anspruch 9, **dadurch gekennzeichnet, daß** man chlorierte Verbindungen mit 1, 2 oder 3 Kohlenstoffatomen umsetzt.

11. Verfahren nach Anspruch 9 oder 10, **dadurch gekennzeichnet, daß** man durch Fluorierung von F30 und/oder F31 H-FKW 32 herstellt.

## Claims

1. Reactor suitable for liquid-phase fluorination and provided, as heating means, with at least one element fixed to the cover so as to be immersed to the bottom of the vessel, **characterized in that** the parts of said reactor that are liable to be in contact with the reaction medium, other than the heating element, are coated with a tetrafluoroethylene/hexafluoropropylene copolymer and **in that** the part of the heating element liable to be in contact with the reaction medium is made of silicon carbide.

2. Reactor according to Claim 1, **characterized in that** the silicon carbide used to make up the heating element has an α-type crystal structure and contains substantially no free silicon atoms.

3. Reactor according to either of Claims 1 and 2, **characterized in that** the silicon carbide used has a substantially zero open porosity and consists of crystals whose mean size is between 2 and 10 µm, preferably between 3 and 7 µm and even more preferably close to 5 µm.

4. Reactor according to one of Claims 1 to 3, **characterized in that** the heating element liable to be in contact with the reaction medium is manufactured by forming the silicon carbide by sintering.

5. Reactor according to one of Claims 1 to 4, **characterized in that** the heating element is a hollow cylindrical sheath closed at its lower end, made of silicon carbide.

6. Reactor according to one of Claims 1 to 5, **characterized in that** parts of the reactor, other than the heating element, that are liable to be in contact with the reaction medium comprise in particular:
- the vessel;
- the means for stirring the medium;
- the means for introducing the reactants and for discharging the products and by-products;
- the measurement means;
- the safety means, and
- the means for separating the catalyst from the vapors resulting from the reaction medium.

7. Reactor according to one of Claims 1 to 6, **characterized in that** a tetrafluoroethylene/hexafluoropropylene copolymer obtained by polymerization of a monomer mixture comprising 10 to 15%, preferably about 12%, by weight of hexafluoropropylene is used.

8. Reactor according to one of Claims 1 to 7, **characterized in that** the copolymer coating has a thickness of between 10 µm and 2 cm, preferably between 1 mm and 2 cm.

9. Process for the liquid-phase fluorination of halogenated hydrocarbons, which comprises their reaction with a fluorinating agent in the presence of a catalyst, **characterized in that** said reaction is carried out in the reactor as defined in one of Claims 1 to 8.

10. Process according to Claim 9, **characterized in that** chlorinated compounds containing 1, 2 or 3 carbon atoms are made to react.

11. Process according to either of Claims 9 and 10, **characterized in that** HFC-32 is prepared by fluorinating F30 and/or F31.
